# EUROPEAN PATENT APPLICATION

(11) **EP 4 420 934 A1**
(43) Date of publication of application: **28.08.2024**
(21) Application number: 24159216.1
(22) Date of filing: 22.02.2024
(51) Int. Cl.: B60R 9/042, B60R 9/045

(54) **ARTICULATED DEVICE FOR SUPPORTING OBJECTS**

(30) Priority: 22.02.2023 IT 202300003099
(71) Applicant: Gema S.r.l., 50013 Campi Bisenzio (FI) (IT)
(72) Inventor: CAMELLINI, Giancarlo, 50013 Campi Bisenzio (FI) (IT)
(74) Representative: Manzella & Associati

(57) **Abstract**

The articulated device (1) for supporting objects (4) includes a rotatable support assembly (20), which can be associated with a top surface (2) of a structure (3), equipped with a first portion (21) and a second portion (22), and connection means (10) for associating said rotatable support assembly (20) with said top surface (2) of said structure (3). The first portion (21) is rotatably connected to said connection means (10) and can be rotated, according to a horizontal axis of rotation (X), between a first deposit position, in which it lies on a horizontal plane, and a second loading and unloading position, in which it lies on an inclined plane. The second portion (22) is rotatably connected to said first portion (21), according to a rotation axis (Y) orthogonal to said lying plane of said first portion (21).

## Description

### Technical Field

The object of the present invention is an articulated support device for loading and storing an object on top of a movable or fixed structure, and for the subsequent unloading of the object from said structure.

### Prior art

A need exists in the art for loading and storing objects on top of mobile structures, such as road vehicles or containers, or even fixed structures, such as boxes or garages, and subsequently for unloading these objects from the aforementioned structures.

In particular, there exists a need for loading and storing elongated objects, such as ladders or bicycles, on road vehicles, in order to facilitate their transport.

A specific need is, for example, for transporting ladders, for example used to carry out work on electrical networks, by road vehicles, in particular by vans or equipped vehicles, for the use of construction personnel. These ladders often have significant dimensions, so they cannot be contained within the load compartment of a vehicle; therefore, they are usually installed on the roof of the vehicle.

It is possible to secure an object such as a ladder to the roof of a van or vehicle using common object bars; however, this operation is not easy, as the ladders used are generally very heavy, and the roof of the vehicle may be so high that it cannot be easily reached by an operator.

For these reasons, devices that facilitate the lifting, positioning and locking of an object such as a ladder on the roof of a road vehicle have been developed.

For example, patent JP3388502 discloses a luggage carrier device that can be installed on the roof of a road vehicle. The luggage carrier device comprises a fixed frame, associable with the roof of the vehicle, and a movable support unit, rotatably connected to the fixed frame by means of an articulated parallelogram connection member. The movable support unit may swing between a transport position, in which it is arranged at the roof of the vehicle, and a loading and unloading position, in which it is arranged at a lateral side of the vehicle, to facilitate the loading and unloading of objects on the luggage carrier device.

Patent application WO2020/157581 shows a further example of a movable support unit associable to the roof of a road vehicle. The movable support unit is rotatably connected to a fixed frame associated with the roof of the road vehicle and may swing between a transport position, in which it is arranged at the roof of the vehicle, and a loading and unloading position, in which it is arranged at a lateral side of the vehicle, to facilitate the loading and unloading of objects on the roof of the vehicle.

Devices known in the art make it possible, in part, to facilitate the loading and unloading of objects on the roof of a vehicle or on the top of a fixed or mobile structure, however they are not free of defects and problems.

In particular, if it is necessary to transport a heavy and elongated object, such as a ladder, it is possible to operate the known devices to bring the object from a transport position, in which it is fixed to the roof of the vehicle, in a configuration substantially aligned with the longitudinal axis of the vehicle, to a loading and unloading position, in which it is side by side with the vehicle, in the same configuration aligned with the longitudinal axis of the vehicle. The object should then be released, lifted and brought to the ground manually, and this operation, due to the weight and large size of the object, can be hard and dangerous for the operator.

In addition, it was noted that known devices often have a very complex structure, high weight and bulky dimensions.

### Disclosure

The aim of the present invention is to solve or mitigate the aforementioned problems, by devising an articulated support device for objects that achieves compactness and constructive simplicity.

Another object of the invention is to provide a device capable of reducing the physical effort and the risks of injury to the operator, in the operations of loading and unloading an object on a structure.

A further object of the invention is to provide a device, which is simple to maintain.

A further object of the invention is to provide a device that has low weight.

A further object of the invention is to manufacture an articulated support device for objects of simple constructive and functional design, which is reliable in operation, has versatile use, as well as relatively economical cost.

The aforementioned objects are achieved, according to the present invention, by the articulated object support device according to the appended claims.

The articulated object support device according to the invention comprises connection means, adapted to stably associate, in a horizontal position, the device with the top of a structure.

Preferably, the object to be supported by the device is a ladder.

Preferably, the structure is a road vehicle.

Preferably, the road vehicle is a van.

Preferably, the connection means comprises a frame, more preferably a bar frame.

The device comprises a rotatable support assembly, provided with a first portion and a second portion.

Preferably, the second portion is superimposed on the first portion.

According to the invention, the first portion is hinged to the connection means and is operable in rotation, around a horizontal axis of rotation, between a first storage or transport position, in which it lies on a horizontal plane, and a second loading and unloading position, in which it lies on an inclined plane.

Preferably, said axis of rotation is parallel to a longitudinal axis of the vehicle.

Preferably, the first portion is shaped by a body or a structure that has a flattened shape.

Preferably, the first portion has a substantially rectangular shape.

More preferably, the first portion is made of one or more plates or a tubular structure or a frame.

Preferably, the device comprises means configured to exert a stress capable of stably maintaining the first portion of the rotatable support assembly selectively in said horizontal position or in said inclined position.

Preferably, said means is suitable for providing a compressive stress and is connected, at a first respective end, to the frame, and at a second respective end, to the first portion of the rotatable support assembly.

Preferably, said means comprises a gas spring.

Preferably, the second portion is shaped by a body or structure having a flattened shape.

Preferably, the second portion is made of one or more plates or a tubular structure or a frame.

Preferably, the second portion has a substantially discoidal shape.

Preferably, the second portion defines a lying plane parallel to the lying plane of the first portion.

According to the invention, the second portion is rotatable with respect to the first portion, according to an axis of rotation orthogonal to the lying plane of the first portion.

According to the invention, the device includes a support element, suitable for receiving and supporting an object, in particular a ladder.

The support element is carried by the second portion, such that it is rotatable, in use, integrally with the aforementioned second portion, between a first storage or transport position, and a second loading and unloading position.

Preferably, in said storage or transport position, the support element is arranged parallel to the longitudinal axis of the road vehicle.

Preferably, in said loading and unloading position, the support element is arranged orthogonally to the longitudinal axis of the road vehicle, laterally to the road vehicle itself.

Preferably, the support element comprises a pair of longitudinal bars connected by a plurality of crosspieces, coplanar with the longitudinal bars.

Preferably, the support element comprises a plurality of stirrups.

Preferably, the stirrups have an inverted U shape.

Preferably, the stirrups extend perpendicular to the lying plane of the longitudinal bars and the crosspieces.

Preferably, the device comprises means configured to exert a stress capable of counteracting, by slowing it down, the rotation of the support element between said transport position, in which it is arranged parallel to the longitudinal axis of the road vehicle, and said position for loading and unloading, in which it is arranged orthogonally to the longitudinal axis of the road vehicle, lateral to the road vehicle itself.

Preferably the aforementioned means is connected, at a first respective end, to the first portion of the rotatable support assembly, and, at a second respective end, to the support element.

Preferably, said means is connected to a longitudinal bar of the support element.

Preferably, said means comprises a hydraulic brake.

Preferably, the device comprises a safety member, capable of rigidly constraining the first portion of the rotatable support assembly to the frame, when the first portion is in said transport position.

Preferably, the safety member comprises retaining means rotatably connected to the frame.

Preferably, the retaining means shapes a hook or tooth operable in rotation between a locking position, in which the hook or tooth engages the first portion of the rotatable support assembly, and an unlocking position, in which the hook or tooth does not hinder the rotation of the first portion of the rotatable support assembly.

Preferably, the safety member also includes pulling means, capable of exerting a stress capable of maintaining the retaining means in said locking position.

Preferably, the pulling means comprises a spring.

Preferably, the device comprises an operating member.

Preferably, the operating member includes a rod.

The invention also concerns a method for installing an object on the top of a structure, comprising the following steps:
a. arranging a structure equipped with an articulated support device, in a storage or transport configuration, in which the first portion of the rotatable support assembly is in the storage or transport position, in which it lies on a horizontal plane, and the second portion is located in the respective storage or transport position;
b. engaging the operating rod in the respective seat of the first portion of the rotatable support assembly;
c. acting manually on the operating rod, bringing the first portion of the rotatable support assembly into the inclined loading and unloading position;
d. act manually by exerting a downward traction action at one end of the support element, thus causing the rotation of said support element from said first storage or transport position to said second loading and unloading position, in which it is located next to said structure;
e. placing an object, in a substantially vertical position, on said support element;
f. acting manually by exerting a pushing action in a lateral direction on said support element, thus causing the rotation of said support element from said second loading and unloading position to said storage or transport position;
g. acting manually on said operating rod, bringing said first portion of the rotatable support assembly into the horizontal transport position.

### Description of drawings

The details of the invention will be more evident from the detailed description of a preferred embodiment of the articulated object support device according to the invention, illustrated by way of example in the attached drawings, in which:
Figure 1 shows a side view of a first embodiment of the device according to the invention, in a configuration in which the first portion of the rotatable support assembly is in the inclined loading and unloading position, while the support element for the object is in the storage position;
Figure 2 shows a side view of the device illustrated in Figure 1, in a configuration in which the first portion of the rotatable support assembly is in the inclined loading and unloading position, while the support element for the object is in a rotation phase between the storage position and the loading and unloading position;
Figure 3 shows a side view of the device illustrated in Figure 1, in a configuration in which the first portion of the rotatable support assembly and the support element for the object are in the loading and unloading position;
Figure 4 shows a rear view of the device illustrated in Figure 3;
Figures 5-7 show respective top views of the device illustrated in Figure 1, in a configuration in which the first portion of the rotatable support assembly and the support element for the object are in the transport position;
Figure 8 shows a side view of a different embodiment of the device according to the invention, in a configuration in which the first portion of the rotatable support assembly is in the inclined loading and unloading position, while the support element for the object is in the storage position;
Figure 9 shows a side view of the device illustrated in figure 8, in a configuration in which the first portion of the rotatable support assembly and the support element for the object are in the loading and unloading position;
Figures 10-12 show respective rear views of a further embodiment of the articulated support device, in different operational phases;
Figures 13-15 show respective side views of the device illustrated in Figures 10-12.

### Description of embodiments of the invention

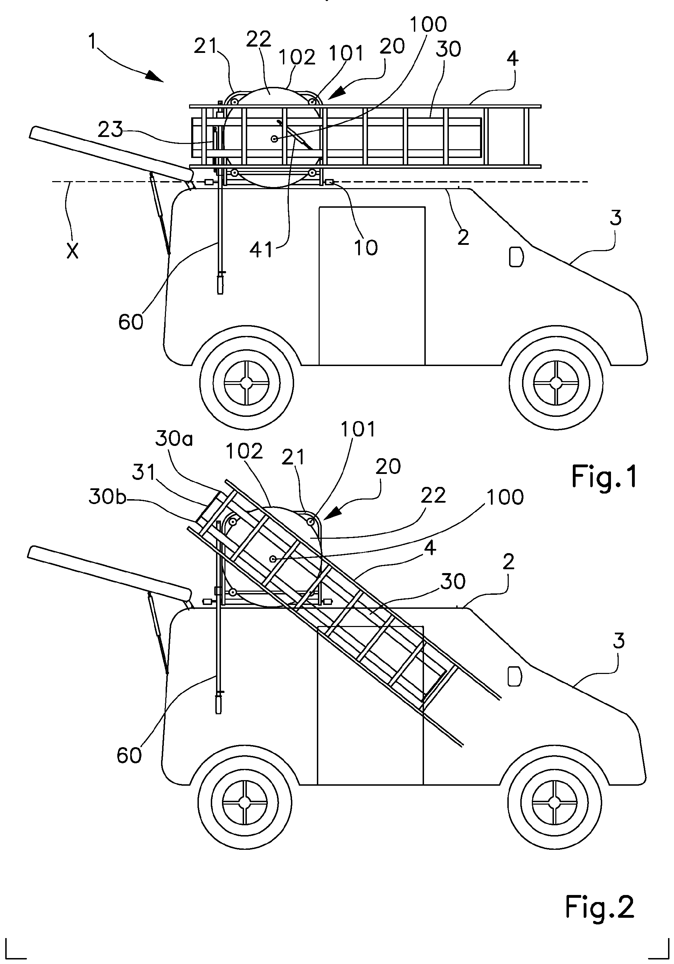

With particular reference to Figures 1 - 8, the articulated mobile support device for loading and storing an object on top of a mobile or fixed structure, and for the subsequent unloading of the object from said structure, is indicated as a whole with the reference number 1.

In the embodiments illustrated in the figures and in the following of the present description, this object is a ladder; however, it can also consist of any other object in particular of elongated shape, for example a bicycle, a small boat or a canoe.

The device 1 comprises connection means 10, adapted to stably associate the device 1 with a top surface 2 of a structure 3.

In the embodiments illustrated in the figures and in the following of the present description, this structure is a road vehicle, in particular a van; however, it could also consist of any other fixed or mobile structure adapted to house an object at its upper surface, for example a vehicle of a different type, a container, a box or a garage.

The connection means 10 preferably comprises one or more uprights, or a frame, for example bars. In the embodiments illustrated in the figures, a bar frame 10 is shown in particular.

The device 1 comprises, associated with the frame 10, a rotatable support assembly 20, provided with a first portion 21 and a second portion 22, in use superimposed on the first portion 21.

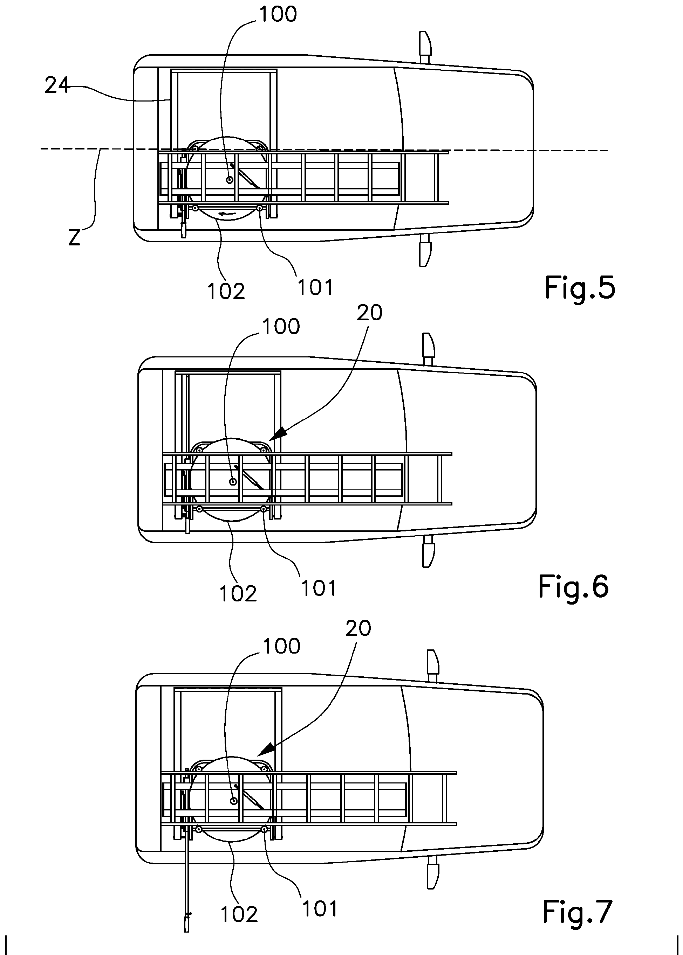

In particular, the first portion 21 is hinged to the frame 10 and is rotatably operable, according to an axis of rotation X horizontal and preferably parallel to a longitudinal axis Z of the vehicle, between a first storage or transport position, in which it lies on a horizontal plane (see in particular figures 5-7), and a second loading and unloading position, in which it lies on an inclined plane (see in particular Figure 1).

Preferably, the first portion 21 is shaped by a body or a structure that has a flattened shape. For example, the first portion 21 can be made of one or more plates, a tubular structure or a frame.

Preferably, the first portion 21 has a substantially rectangular shape.

The device preferably comprises means 23 configured to exert a stress capable of stably maintaining the first portion 21 of the rotatable support assembly 20 selectively in said horizontal position or in said inclined position.

The means 23 preferably comprises a gas spring, adapted to provide a compressive stress and connected, at a first end of the spring, to the frame 10, and, at a second end of the spring, to the first portion 21 of the rotatable support assembly 20.

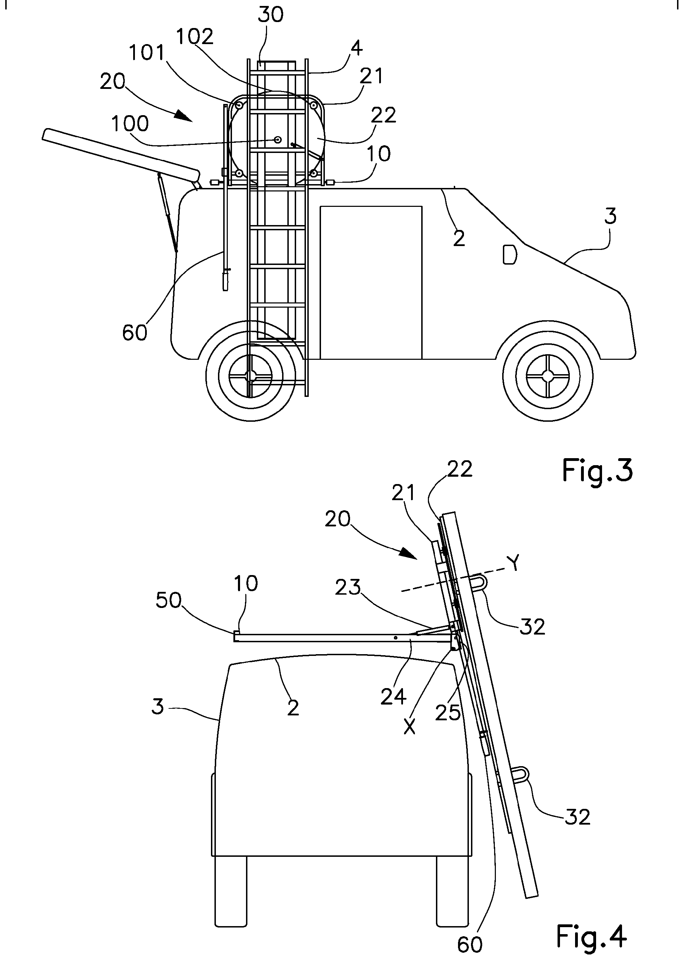

In particular, according to one embodiment, the frame 10 comprises a bar 24 provided, at one end, with an arm 25 extending perpendicularly with respect to the bar 24 itself. The first portion 21 of the rotatable support assembly 20 is hinged to the arm 25, in such a way that the axis of rotation X is eccentric with respect to the bar 24 (see in particular Figure 4).

Preferably, the bar 24 is arranged orthogonally to the longitudinal axis Z of the vehicle (see in particular Figure 5).

Preferably, the second portion 22 is shaped by a body or structure having a flattened shape. For example, the second portion 22 can be made of one or more plates, a tubular structure or a frame.

In the illustrated embodiment, the second portion 22 is formed by a body having a discoidal shape.

The second portion 22 defines a lying plane parallel to the lying plane of the first portion 21.

The second portion 22 is rotatable with respect to the first portion 21, according to an axis of rotation Y orthogonal with respect to the lying plane of the first portion 21 (see in particular Figure 4).

According to a preferred embodiment, the second portion 22 is rotatably connected to the first portion 21 by means of a central pin 100 and/or by peripheral support means 101.

Preferably, the peripheral support means 101 comprises a plurality of wheels (for example four) adapted to engage a peripheral edge 102 or a peripheral zone of the discoidal body of the second portion 22. The peripheral support means 101 may also comprise means equivalent to said wheels, such as for example a guide forming a channel adapted to engage the peripheral edge 102. Alternatively, the peripheral support means 101 may comprise one or more sliding blocks, adapted to slide at the peripheral edge 102 or a peripheral area of the discoidal body of the second portion 22.

The device 1 further provides a support element 30, adapted to receive and support an object, in particular a ladder 4.

The support element 30 is carried by the second portion 22, so as to be rotatable, in operation, integrally with the second portion 22, from a first transport position, in which it is preferably arranged parallel to the longitudinal axis Z of the road vehicle 3 (see Figure 1), to a second loading and unloading position, in which it is preferably arranged orthogonally to the longitudinal axis Z of the road vehicle 3, laterally to the road vehicle 3 itself (see Figure 3).

Advantageously, when the support element 30 is in the second loading and unloading position, laterally to the same road vehicle 3, one end of the support element 30 is located close to the ground, so as to facilitate the operator in the operation of removing the ladder 4 from the support element 30.

The support element 30 preferably comprises a pair of longitudinal bars 30a, 30b connected by a plurality of crossbars 31, coplanar to the longitudinal bars 30a, 30b. The support element 30 preferably comprises a plurality of brackets 32, preferably inverted U-shaped, which extend perpendicularly to the lying plane of the longitudinal bars 30a, 30b and the crossbars 31. The support element 30 is adapted to receive, in use, a ladder 4 resting on the longitudinal bars 30a, 30b. In use, the brackets 32 are arranged between the rungs of the ladder 4, longitudinally blocking the ladder 4 on the transport device 30.

The support element 30 can preferably perform a rotation equal to 90° between the first transport position and the second loading and unloading position.

However, provision can be made that the angular stroke performed by the element 30 is different, in particular that it is less than or greater than 90°.

The rotatable support assembly 20 may comprise one or more end-of-stroke elements, for example posts protruding above the plane of rotation of the second portion 22, in such a way as to interfere with the rotation of the support element 30, limiting the angular stroke between the first transport position and the second loading and unloading position.

According to one embodiment, the device 1 also includes means 40 configured to exert a stress capable of counteracting, by slowing it down, the rotation of the support element 30 between said transport position, in which it is arranged parallel to the longitudinal axis Z of the road vehicle 3, and said loading and unloading position, in which it is arranged orthogonally to the longitudinal axis Z of the road vehicle 3, laterally to the road vehicle 3 itself.

The means 40 preferably comprises a hydraulic brake, comprising a cylinder and a piston. The piston is adapted to slide in the cylinder, producing a requisite resistance when the motion occurs in one direction, and without producing resistance when the motion occurs in the opposite direction. The hydraulic brake 40 is connected, at a first end of the hydraulic brake, to the first portion 21 of the rotatable support assembly 20, and, at a second end of the hydraulic brake, to the support member 30.

Preferably, the hydraulic brake 40 is connected to a longitudinal bar 30a, 30b of the support element 30, at a portion of the longitudinal bar 30a, 30b located between the center and an end of the same longitudinal bar 30a, 30b.

According to one embodiment, the device 1 also comprises means 41 configured to exert a stress capable of facilitating the rotation of the support element 30 from said loading and unloading position to said transport position.

The means 41 preferably comprises a gas spring, adapted to provide a predetermined compressive stress and connected, at a first end of the spring, to the first portion 21 of the rotatable support assembly 20, and, at a second end of the spring, to the support element 30.

Preferably, the spring 41 is connected to a longitudinal bar 30a, 30b of the support element 30, at a portion of the longitudinal bar 30a, 30b located between the center and an end of the same longitudinal bar 30a, 30b.

The means 40 and the means 41 advantageously cooperate by exerting opposing stresses, determining a condition of equilibrium that facilitates the operator in the movement of the support element 30 between said transport position and said loading and unloading position, and vice versa.

The device 1 also includes a safety member 50, capable of rigidly constraining the first portion 21 of the rotatable support assembly 20 to the frame 10, when the first portion 21 is in said transport position.

The safety member 50 preferably comprises retaining means rotatably connected to the frame 10. The retaining means forms a hook or tooth operable in rotation between a locking position, in which the hook or tooth engages the first portion 21 of the rotatable support assembly 20, and an unlocking position, in which the hook or the tooth does not hinder the rotation of the first portion 21 of the rotatable support assembly 20. The safety element 50 also includes pulling means, adapted to exert a stress capable of maintaining the retaining means in said locking position. The pulling means is preferably of the type of a spring.

The device 1 preferably comprises an operating member 60. The operating member 60 is preferably shaped by a rod, connected to the rotatable support assembly 20.

According to one embodiment, the rod 60 is adapted to be connected in detachable manner to the rotatable support assembly 20. In particular, the rod 60 is adapted to be rigidly connected, in operation, to the first portion 21 of the rotatable support assembly 20, engaging it at a specific seat, so as to be a sort of extension of the first portion 21, in a direction orthogonal to the axis of rotation X (see Figure 1).

The rod 60, when engaged in the appropriate seat of the first portion 21 of the rotatable support assembly 20, is also configured to exert an action on the safety element 50, in particular by determining the rotation of the retaining means from said locking position, in which the hook or the tooth engages the first portion 21 of the rotatable support assembly 20, to said unlocking position.

According to a different embodiment, the rod 60 is slidable between a first position in which it is inserted in the first portion 21 and a second extracted position, in which it protrudes externally with respect to the first portion 21, extending in a direction orthogonal to the axis of rotation X.

The device 1 may comprise a further safety element, not shown in the attached drawings, adapted to rigidly constrain the second portion 22 to the first portion 21, when the second portion 22 is in said transport position, where it is arranged parallel to the longitudinal axis Z of the road vehicle 3.

The operation of the movable support device 1 for ladders is easily understandable from the foregoing description.

In a running condition of the vehicle 3, the device 1 is arranged in a transport configuration, in which the first portion 21 of the rotatable support assembly 20 is arranged in said transport position, in which it lies on a horizontal plane, and the second portion 22 is in the respective aforementioned transport position, in which it is arranged parallel to the longitudinal axis Z of the road vehicle 3. In such a configuration, the first portion 21 is rigidly constrained to the frame 10 by the safety member 50.

An operator, having to unload a ladder 4 that is arranged on the roof 2 of the vehicle 3, firstly engages the rod 60 in the appropriate seat of the first portion 21, or moves the rod 60 from the inserted position to the extracted position.

The actuation of the rod 60 determines the rotation of the safety element 50 from the locking position to the unlocking position, thus allowing the release of the first portion 21, which is therefore able to rotate in the inclined loading and unloading position. It should be noted that, when the first portion 21 is in the horizontal transport position, it receives an action from the gas spring 23 which, by exerting a compression, tends to maintain the first portion 21 in said horizontal transport position.

Subsequently, the operator manually acts on the rod 60, bringing the first portion 21 into the inclined loading and unloading position. This operation is particularly easy, because it is carried out by exploiting the lever arm formed by the rod 60, also taking advantage of the action of the gas spring 23 which makes an arched path, first compressing until it is brought into a position parallel to the bar 24, and, later, extending, cooperating in this last step with the action exerted by the operator on the rod 60. In essence, the arcuate path taken by the gas spring 23 comprises a first segment, in which the spring 23 exerts a compressive action adapted to maintain the first portion 21 in the transport position, and a second segment, in which the spring 23 exerts a compressive action adapted to maintain the first portion 21 in the loading and unloading position.

Subsequently, when the first portion 21 is stably placed in the inclined loading and unloading position, the operator manually exerts a downward pulling action at the end of the support element 30 facing the front part of the vehicle, thus causing the rotation of the support element 30 from said first transport position, in which it is arranged parallel to the longitudinal axis Z of the road vehicle 3 to said second loading and unloading position, in which it is arranged orthogonally to the longitudinal axis Z of the road vehicle 3, lateral to the same road vehicle 3. It should be noted that the rotation of the support element 30 is advantageously assisted by the hydraulic brake 40, which slows down the descent movement due to the force of gravity, so as to avoid risks for the operator due to a sudden movement of the device.

At the end of the rotation movement, the ladder 4 is positioned substantially vertically next to the vehicle 3, with one end close to ground level (see Figure 3). The operator can therefore easily take the ladder 4, extracting it laterally with respect to the vehicle 3.

In order to load the ladder 4 onto the roof of the vehicle 3, it is sufficient to repeat the same steps carried out in the unloading operation in reverse order.

It should be noted that the hydraulic brake 40 does not resist the movement of the support element 30 from the loading and unloading position to the transport position. This movement can therefore be easily carried out by the operator, manually exerting a thrust, in a lateral direction, at the end of the support element 30, thus determining its rotation with respect to the first portion 21 (see in particular Figure 2).

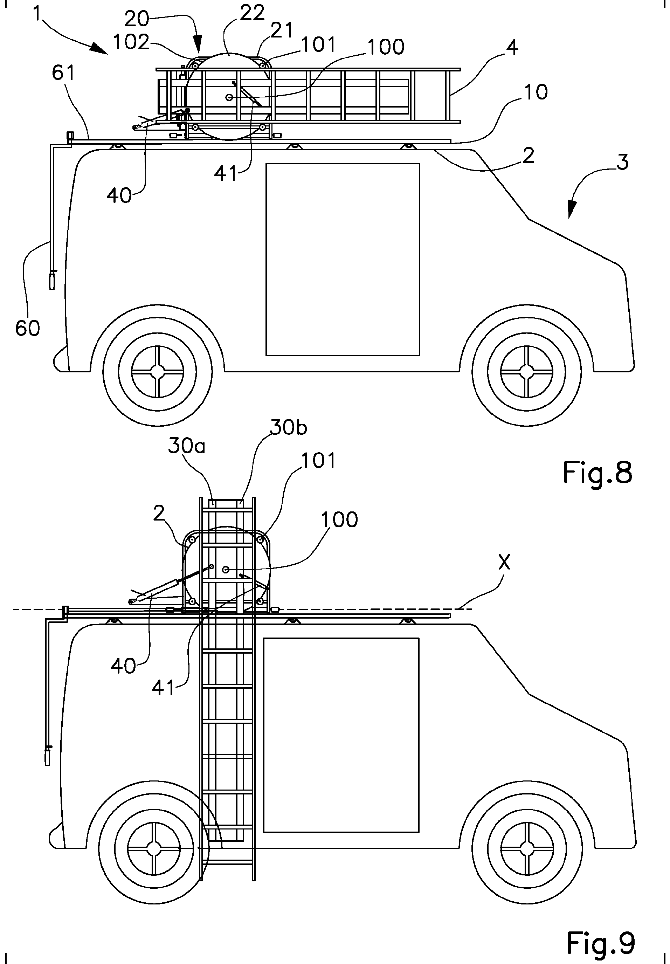

Figures 8 and 9 illustrate a different embodiment of the movable support device 1 for ladders, particularly suitable for vehicles of greater height, for example vans having a higher load compartment. According to this embodiment, the device 1 comprises a return rod 61, which makes it possible to engage the operating rod 60 in a seat located near the rear side of the vehicle 3.

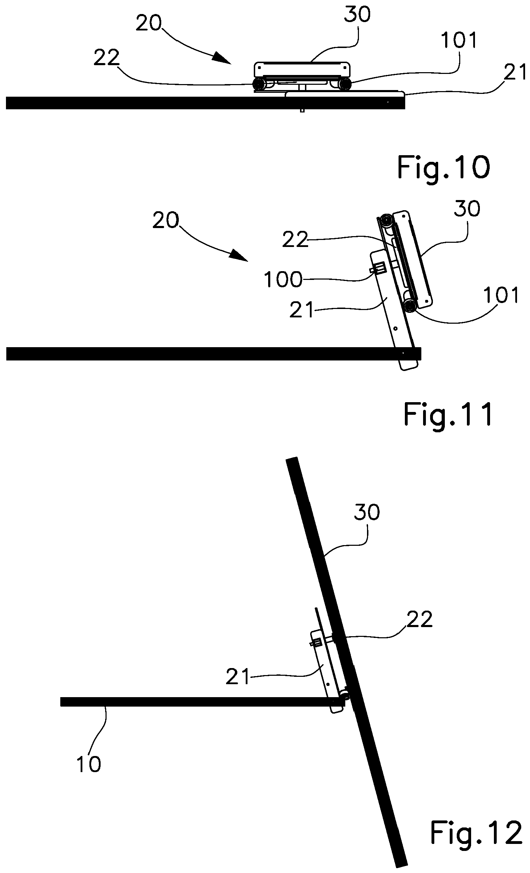

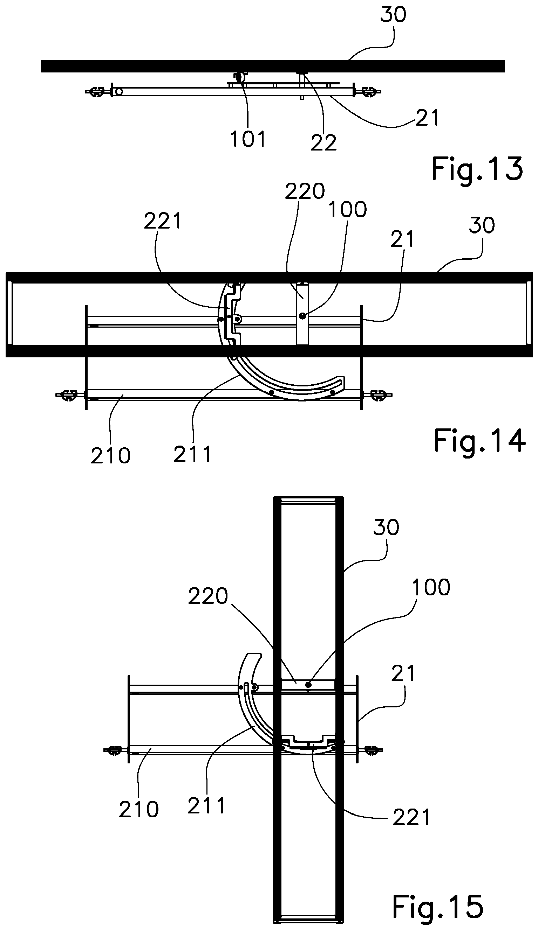

According to a different embodiment, represented in Figures 10-15, the first portion 21 of the rotatable support assembly 20 comprises a frame 210, to which a plate 211, having the shape of a disk portion, is rigidly fixed.

In particular, the plate 211 has an elongated shape, corresponding to the peripheral margin of a circular segment.

The second portion 22 of the rotatable support assembly 20 comprises a first plate 220, rigidly fixed to the support element 30 and carrying a central pivot pin 100. The second portion 22 also comprises a second plate 221, rigidly fixed to the support element 30 and carrying peripheral support means 101. The peripheral support means 101 may comprise one or more sliding blocks or wheels. The pin 100 is rotatably connected to the first portion 21 and allows rotation of the second portion 22 relative to the first portion 21. The peripheral support means 101, carried by the second portion 22, engage the plate 211 of the first portion 21, supporting the weight of the second portion 22 and the load housed therein. It is noted that the described embodiment advantageously allows to reduce the weight and the overall dimensions of the device 1.

It is also noted that, although the device 1 indicated in the figures is positioned such that the X axis of rotation of the first portion 21 of the rotatable support assembly 20 is parallel to the longitudinal axis Z of the vehicle, different configurations are also possible, for example the axis of rotation X of the first portion 21 of the rotatable support assembly 20 can be parallel to the longitudinal axis Z of the vehicle, so that the support element 30, in the second loading and unloading position, is positioned behind the road vehicle 3.

It is further noted that it is possible to provide that the rotation of the support member 30 from the storage position to the loading and unloading position takes place counterclockwise, rather than clockwise as illustrated in Figures 1-3.

The device according to the present invention achieves the aim of reducing the physical effort and the risks of injury for the operator, in the operations of loading and unloading a ladder or other object on the roof of a road vehicle or other structure.

This result is obtained in particular thanks to the inventive idea of using a rotatable support assembly, equipped with a first portion, which can be rotated according to a horizontal rotation axis, between a first storage or transport position, in which it lies on a horizontal plane, and a second loading and unloading position, in which it lies on an inclined plane, and also equipped with a second portion, which in turn rotates with respect to the first portion according to an axis of rotation orthogonal to the lying plane of the first portion. This allows in particular to easily move an object, such as a ladder, between a transport position, in which it is installed on the roof of the vehicle, and a loading and unloading position, in which it is located in a substantially vertical position next to the vehicle, and is therefore removable effortlessly by the operator.

In the practical embodiment of the invention, the materials used, as well as the shape and the dimensions, may be modified depending on needs without departing from the scope of the appended claims.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An articulated support device (1) for objects (4) comprising
a rotatable support assembly (20), associable with a top surface (2) of a structure (3), provided with a first portion (21) and a second portion (22);
connecting means (10) for associating said rotatable support assembly (20) with said top surface (2) of said structure (3);
said first portion (21) being rotatably connected to said connection means (10) and being operable in rotation, according to a horizontal rotation axis (X), between a first storage position, in which it lies on a horizontal plane, and a second loading and unloading position, in which it lies on an inclined plane;
said second portion (22) being rotatably connected to said first portion (21), according to an axis of rotation (Y) orthogonal to said lying plane of said first portion (21);
a support element (30) adapted to receive and support an object (4) rigidly constrained, said support element (30) being carried by said second portion (22), so as to be rotatable, in operation, integrally with said second portion (22), between a first storage position, and a second loading and unloading position;
said rotatable support assembly (20) being configured in such a way that, when said first portion (22) and said support element (30) are in said respective first storage position, said support element (30) is positioned on a horizontal plane at said top surface (2) of said structure (3), and when said first portion (22) and said support element (30) are in said respective second loading and unloading position, said support element (30) is arranged alongside said structure (3).

2. The device of claim 1, wherein said second portion (22) comprises a body or a structure, rotatably connected to said first portion (21) by a central pin (100) and/or by peripheral support means (101).

3. The device of claim 2, wherein said peripheral support means (101) comprises wheels or sliding blocks suitable for engaging a circular edge (102, 211) of said first or second portion (21, 22).

4. The device of claim 1, wherein it includes means (23) configured to exert a stress capable of stably maintaining said first portion (21) of said rotatable support assembly (20) selectively in said horizontal position or in said inclined position.

5. The device of claim 1, wherein it includes means (40) configured to exert a stress capable of counteracting, by slowing it down, the rotation of said support element (30), between said first storage position and said second loading and unloading position.

6. The device of any one of the previous claims, wherein it includes a safety member (50), for rigidly constraining said first portion (21) of said rotatable support assembly (20) to said connection means (10), when said first portion (21) is in said storage position.

7. The device of claim 6, wherein said safety member (50) includes retaining means rotatably connected to said connection means (10), said retaining means forming a hook or a tooth that can be rotated between a locking position, in which said hook or tooth is suitable for hooking said first portion (21) of said rotatable support assembly (20), and an unlocking position, in which said tooth or hook does not hinder the rotation of said first portion (21), said safety member (50) comprising pulling means, capable of exerting a stress capable of maintaining said retaining means in said locking position.

8. The device of any one of the preceding claims, **characterized in that** it includes an operating member (60), said operating member (60) including a rod, suitable for being connected to said rotatable support assembly (20), said first portion (21) of said rotatable support assembly (20) including a seat suitable for receiving said rod (60) in operation.

9. The device of claim 4, wherein said means (23) is configured such that it makes, in operation, an arc path between said first transport position and said second loading and unloading position of said first portion (21), said arc path comprising a first segment, in which said means (23) exert a compressive stress to maintain said first portion (21) in said transport position, and a second segment, in which said means (23) exert a compressive stress to maintain said first portion (21) in said loading and unloading position.

10. The device of any one of the preceding claims, wherein said structure (3) is a road vehicle.

11. A method for installing an object (4) on a top surface of a structure (3), by means of an articulated support device (1) according to any one of the preceding claims, comprising the following steps:
a. arranging a structure (3) equipped with an articulated support device (1), in a storage or transport configuration, in which the first portion (21) of the rotatable support assembly (20) is in the storage or transport position, in which it lies on a horizontal plane, and the second portion (22) is in the respective storage or transport position;
b. engaging the operating rod (60) in the respective seat of the first portion (21) of the rotatable support assembly (20);
c. acting manually on the operating rod (60), bringing the first portion (21) of the rotatable support (20) assembly into the inclined loading and unloading position;
d. acting manually by exerting a downward traction action at one end of the support element (30), thus causing the rotation of said support element (30) from said first storage or transport position to said second loading and unloading position, in which it is arranged alongside said structure;
e. placing an object (4), in a substantially vertical position, on said support element (30);
f. acting manually by exerting a thrust in a lateral direction on said support element (30), thus causing the rotation of said support element (30) from said second loading and unloading position to said storage or transport position;
g. acting manually on said operating rod (60), bringing said first portion (21) of the rotatable support assembly (20) into the horizontal transport position.
